# EUROPÄISCHE PATENTSCHRIFT

(11) **EP 4 204 908 B1**
(45) Veröffentlichungstag und Bekanntmachung des Hinweises auf die Patenterteilung: **06.08.2025**
(21) Anmeldenummer: 21759092.6
(22) Anmeldetag: 13.08.2021
(51) Int. Cl.: G05B 9/02

(54) **FELDGERÄT**
FIELD DEVICE
APPAREIL DE TERRAIN

(30) Priorität: 26.08.2020 DE 102020122321
(43) Veröffentlichungstag der Anmeldung: 05.07.2023
(73) Patentinhaber: Samson Aktiengesellschaft, 60314 Frankfurt am Main (DE)
(72) Erfinder: JUNG, Torsten, 60529 Frankfurt (DE); BIEGER, Jens, 64546 Mörfelden-Walldorf (DE); STECKENREITER, Thomas, 63322 Rödermark (DE)
(74) Vertreter: Schmid, Nils T.F.
(86) Internationale Anmeldenummer: PCT/EP2021/072640
(87) Internationale Veröffentlichungsnummer: WO 2022/043103

(56) Entgegenhaltungen:
- EP-A1- 0 945 714
- DE-A1- 102008 029 956
- DE-A1- 19 810 350
- DE-A1- 19 824 146

## Beschreibung

Die Erfindung betrifft ein Feldgerät für eine prozesstechnische Anlage, wie eine Chemieanlage, beispielsweise eine Raffinerie, ein Kraftwerk, beispielsweise ein Nuklearkraftwerk, eine lebensmittelverarbeitende Anlage oder dergleichen.

In prozesstechnischen Anlagen werden verschiedene Technologien zur Datenübertragung verwendet. Viele Feldgeräte verwenden eine kombinierte zwei-Leiter-Verbindung zur kombinierten Signal- und Leistungs-Übertragung. Auf der zwei-Leiter-Verbindung wird von einer zentralen Steuereinheit, beispielsweise einer zentralen Leitwarte einer prozesstechnischen Anlage, ein 4..20-mA-Signal an das Feldgerät übertragen. Bei einem als Stellventil gebildeten Feldgerät kann beispielsweise ein 4-mA-Steuersignal das Stellventil veranlassen, in eine Schließstellung zu verfahren, wohingegen eine 20-mA-Signal das Stellventil dazu veranlassen kann, in eine maximale Öffnungsstellung zu fahren. Signale in dem Bereich zwischen 4 und 20 mA können das Stellventil veranlassen, eine vorbestimmte Zwischenstellung zwischen der Schließstellung und der maximal geöffneten Stellung einzunehmen, die beispielsweise proportional zu dem Stromsignal sein kann. Ein passives Feldgerät in Form eines Sensors kann ein analoges 4..20-mA-Signal an eine zentrale Steuereinheit übermitteln, um eine Information über einen in der prozesstechnischen Anlage, beispielsweise einem Teil oder einer Komponente der prozesstechnischen Anlage oder einem Prozessfluid zu melden. Beispielsweise kann ein Stromsignal proportional zu einem bestimmten Druckbereich von einem Drucksensor an eine zentrale Steuereinheit übermittelt werden. Die Übertragung von Informationen beziehungsweise Daten mittels eines 4..20-mA-Signals ist begrenzt auf sehr geringe Datenmengen.

Gebräuchlich zur Übertragung von Daten in prozesstechnischen Anlagen sind auch das HART-Protokoll, das FOUNDATION Fieldbus-Protokoll, das PROFIBUS-Protokoll und eine Reihe anderer digitaler Kommunikationstechnologien. Seit 2007 ist HART Teil der Feld-Bus-Norm IEC 61158. Zur Datenübertragung gemäß dem HART-Protokoll wird einem analogen Signal, beispielsweise einem 4..20-mA-Signal, eine hochfrequente Schwingung, beispielsweise ± 0,5 mA überlagert. Dabei kann eine digitale 1 mit der Frequenz 1,2 kHz und eine digitale "0" mit der Frequenz 2,2 kHz dargestellt werden. HART erlaubt die Übertragung von Prozess- und Diagnoseinformationen sowie Steuersignalen zwischen Feldgeräten und einer übergeordneten Steuereinheit, beispielsweise einer zentralen Leitwarte.

In manchen prozesstechnischen Anlagen werden Daten von einer zentralen Steuereinheit an Feldgeräte mit einer sogenannten "Power over Ethernet"-Technologie übertragen. Power over Ethernet (PoE) bezeichnet eine Technologie, mit der netzwerkfähige Geräte über ein 8-adriges Ethernetkabel mit Strom versorgt werden. Eine Datenübertragung mittels PoE erfolgt gemäß dem IEEE-Standard 802.3af (Juli 2003). Mit Power over Ethernet-Systemen sollen Stromversorgungskabel eingespart werden, um netzwerkfähige Geräte an schwer zugänglichen oder beengten Stellen mit Strom zu versorgen. Gemäß dem IEEE-Standard 802.3af können beteiligte Geräte in Energieversorger (Power sourcing equipment, PSE) und Verbraucher (Power devices, PD) unterteilt werden. Als Versorgungsspannung für die Verbraucher ist im Betrieb 48 V vorgesehen. Die maximale Stromaufnahme der Geräte beträgt 350 mA, wobei bis zu 400 mA erlaubt sind, daraus ergibt sich eine maximale Leistungsaufnahme pro Gerät von 14,5 W. Zur Übertragung der Leistung können freie Adern und/oder signalführende Adern des Ethernetkabels verwendet werden. PoE erlaubt die schnelle Übertragung großer Datenmengen. Die Leistungsdichte der PoE-Technologie lässt ihren Einsatz in explosionsgefährdeten Bereichen nicht zu. Die Verwendung der PoE-Technologie setzt einen sehr viel höheren Investitionsaufwand voraus, als analoge 4..20-mA-Kommunikation. Auch für das Nachrüsten bestehender prozesstechnischer Anlagen mit PoE-Technologie sind enorme Investitionen erforderlich, welche in vielen Fällen unwirtschaftlich sind. Ein Feldgerät, das über eine Ethernet-Verbindung (Power over Ethernet) mit Leistung versorgt ist und ein zugehöriges Inbetriebnahmeverfahren ist in DE 10 2006 036 770 A1 beschrieben.

Einen Ansatz zur Verknüpfung von Datenübertragung einerseits per Ethernet und andererseits mittels etablierter und weit verbreiteter Kommunikationstechnologien prozesstechnischer Anlagen realisiert die sogenannte Adavanced Physical Layer (APL)-Technologie insbesondere gemäß dem Standard IEEE P802.3cg (2016). Im Unterschied zu der PoE-Technologie soll die APL-Technologie insbesondere dazu geeignet sein, netzwerkfähige Geräte in explosionsgefährdeten Bereichen mit einzubeziehen (Zone 0 und 1 / Division 1). Zone 0 beschreibt ein Gebiet in der eine explosive Gas-Luft Mischung permanent oder für lange Zeiträume vorhanden ist. Zone 1 beschreibt ein Gebiet, in dem brennbare oder leitfähige Staubteilchen vorhanden sind, sowie Gebiete, in denen eine explosive Gas-Luft Mischung unter normalen Betriebsbedingungen kurzzeitig vorhanden sein kann. Mittels der APL-Technologie soll es auch möglich sein, Feldgeräte eigensicher auszulegen. Mittels verdrillter Doppeladern (twisted-care wiring gemäß 10BASE-T1L) sollen Datenübertragungsraten von 10 Mb/s bis zu 100 Mb/s und mehr erreicht werden. Prozesstechnische Anlagen mit APL-Technologie können von einer zentralen Steuereinheit bis zu einem APL-Field-Switch mit einer sogenannten Trunk-Daten- und Leistungs-Übertragungsleitung insbesondere mit einer Länge von bis zu 1000 m ausgestattet sein. Die sogenannten Trunk-Leitungen sollen zur Übertragung von Leistungen von bis zu 54 W ausgelegt sein. An das sogenannte APL-Field-Switch können mehrere Feldgeräte mit sogenannten Spur-Daten- und Leistungs-Übertragungleitungen insbesondere mit einer Länge von bis zu 200 m angeschlossen sein. Die Spur-Leitungen sind zur Bereitstellung einer Leistung von üblicherweise höchstens 500 mW eingerichtet. Als Daten- und Leistungs-Übertragungsleitung wird üblicherweise ein IEC 61158 Typ A Feldbus Kabel eingesetzt, das verdrillte Doppeladern und einen elektrisch abschirmenden Mantel (auch als Schild bezeichnet) aufweist. Gemäß dem APL-Standard IEEE P802.3cg (2016) müssen elektrisch abschirmende Kabel zur Verbindung zwischen APL-Field-Switch und jedem einzelnen Feldgerät eingesetzt werden. An eine Spur-Leitung können bis zu fünf Feldgeräte angeschlossen sein. An eine Trunk-Leitung können mehrere, beispielsweise höchstens 5 bis zu höchstens 10 APL-Field-Switches angebunden sein. Die APL-Technologie ist kompatibel zum Betrieb von Feldgeräten in explosionsgefährdeten Bereichen. Hierzu kann eine geringe Leistungsdichte vorgesehen sein, um zu verhindern, dass die an einem Feldgerät vorhandene elektrische und/oder thermische Energie selbst unter anormalen Betriebsbedingungen oberhalb einer Zündschwelle gelangen kann. Die APL-Field-Switches und Feldgeräte sind dazu ausgelegt, gemäß der Schutzklasse "Ex d" zündsicher (explosionssicher) zu sein.

DE 198 10 350 A1 betrifft ein elektrisches Feldgerät der Zündschutzart der druckfesten Kapselung zum Einsatz in explosionsgefährdeten Bereichen.

DE 10 2008 029 956 A1 offenbart ein Messsystem mit einem Sensormodul, das ein Sensor-Gehäuse, wenigstens einen zumindest teilweise im Sensor-Gehäuse angeordneten Meßwandler zum Erfassen wenigstens einer Meßgröße und zum Erzeugen wenigstens eines von der Meßgröße beeinflußten Primärsignals sowie eine innerhalb des Sensor-Gehäuses angeordnete, mit dem Meßwandler verbundenen Sensor-Elektronik zum Konvertieren des vom Meßwandler gelieferten Primärsignals in ein Sensorsignal aufweist.

DE 198 24 146 A1 betrifft einen Vorortregelkreis mit Anbindung an eine Steuerung in einem Feldbereich.

EP 945 714 A1 beschreibt ein elektronisches Gerät für den Einsatz in explosionsgefährdeten Bereichen.

Die APL-Technologie erlaubt die Übermittlung großer Datenvolumina und zeichnet sich durch eine Kompatibilität zu bestehenden zwei-Leiter Kommunikationssystemen aus. Allerdings beklagen viele Nutzer auch bei der APL-Technologie die durchaus hohen Investitionskosten zur Aus- oder Umrüstung einer kompletten Anlage.

Es ist eine Aufgabe der Erfindung, die Nachteile des Stands der Technik zu überwinden und insbesondere ein Feldgerät und/oder ein System bereitzustellen, dass eine sichere und kostengünstige Verwendung in Kombination mit APL-Technologie erlaubt. Diese Aufgabe löst ein Feldgerät für eine prozesstechnische Anlage, wie eine Chemieanlage, beispielsweise eine Raffinerie, ein Kraftwerk, beispielsweise ein Nuklearkraftwerk, eine Lebensmittelverarbeitende Anlage oder dergleichen mit den Merkmalen des Anspruchs 1.

Das Feldgerät weist eine leistungsverteilende Datenvermittlungseinrichtung auf. Die leistungsverteilende Datenvermittlungseinrichtung weist einen zur Leistungsaufnahme bei einem ersten Leistungsniveau größer als 10 W, insbesondere größer als 20 W, vorzugsweise größer als 50 W, konfigurierten elektrischen Primäranschluss auf. Der elektrische Primäranschluss kann als Trunkanschluss bezeichnet sein. Insbesondere ist der elektrische Primäranschluss eingerichtet zu einer Leistungsaufnahme von nicht mehr als 100 W, insbesondere nicht mehr als 75 W, vorzugsweise nicht mehr als 60 W. Beispielsweise kann der Primäranschluss zur Leistungsaufnahme bei einem ersten Leistungsniveau von 54 W eingerichtet sein. Der elektrische Primäranschluss kann insbesondere zur kombinierten Datenkommunikation, insbesondere Digitaldatenkommunikation, und Leistungsaufnahme bei dem ersten Leistungsniveau eingerichtet sein.

Die leistungsverteilende Datenvermittlungseinrichtung weist ferner wenigsten zwei elektrische Sekundäranschlüsse zur kombinierten Datenkommunikation, insbesondere Digitaldatenkommunikation, und Leistungsübergabe bei einem zweitem Leistungsniveau kleiner als 10 W, insbesondere kleiner als 1 W, pro Sekundäranschluss auf. Die wenigstens zwei elektrischen Sekundäranschlüsse können dazu eingerichtet sein für eine Leistungsübergabe bei einem zweiten Leistungsniveau von wenigstens 1 mW, wenigstens 10 mW oder wenigstens 20 mW. Vorzugsweise kann ein elektrischer Sekundäranschluss, insbesondere wenigstens zwei elektrische Sekundäranschlüsse, vorzugsweise alle elektrischen Sekundäranschlüsse der leistungsverteilenden Datenvermittlungseinrichtung, dazu eingerichtet sein zur kombinierten Datenkommunikation, insbesondere Digitaldatenkommunikation, und Leistungsübergabe bei einem zweiten Leistungsniveau von nicht mehr als 0,5 W pro Sekundäranschluss. Ein Sekundäranschluss kann als Spur-Anschluss bezeichnet sein.

Die leistungsverteilende Datenvermittlungseinrichtung kann insbesondere genau einen elektrischen Primäranschluss haben. Die leistungsverteilende Datenvermittlungseinrichtung kann wenigstens zwei, wenigstens fünf, wenigstens zehn und/oder nicht mehr als 150, nicht mehr als 100 oder nicht mehr als 50 elektrische Sekundäranschlüsse aufweisen.

Das Feldgerät weist ein Gehäuse zur staub- und/oder wassergeschützten Unterbringung elektrischer Komponenten auf. Das Gehäuse kann beispielsweise entsprechend der Schutzart IP65 oder besser ausgebildet sein. Insbesondere sind die wenigstens zwei elektrischen Sekundäranschlüsse innerhalb des Gehäuses angeordnet. Insbesondere ist der elektrische Primäranschluss innerhalb des Gehäuses angeordnet. Insbesondere ist die leistungsverteilende Datenvermittlungseinrichtung innerhalb des Gehäuses angeordnet. Ein Gehäuse zu staub- und/oder wassergeschützten Unterbringung elektrischer Komponenten kann beispielsweise gemäß einer Schutzart des sogenannten International Protection Code (IP-Code) definiert sein. Schutzarten können den Schutzgrad des Gehäuses gegen Berührung, Fremdkörper, Wasser und dergleichen beschreiben. IP-Codes können beispielsweise gemäß IEC 529, EN 60529, DIN VDE 0470-1 in der jeweils 2014 geltenden Fassung festgelegt sein. Die erste Ziffer des IP-Code bezeichnet den Schutz gegen Fremdkörper und Berührung, wobei ein höherer Wert einen ausgeprägteren Schutz bestimmt. Die erste Ziffer kann folgende Bedeutung haben: 3: geschützt gegen feste Fremdkörper größer als 2,5 mm und gegen Berührung mit Werkzeug; 4: geschützt gegen feste Fremdkörper größer als 1 mm und gegen Berührung mit Draht; 5: geschützt gegen Staub und Berührung; 6: Dicht gegen Staub, geschützt gegen Berührung. Die zweite Ziffer des IP-Code betrifft den Schutz gegen Wasser. Die zweite Ziffer kann folgende Bedeutung haben: 3: geschützt gegen Sprühwasser; 4: geschützt gegen Spritzwasser; 5: geschützt gegen Strahlwasser; 6: geschützt gegen schweres Strahlwasser; 7: geschützt gegen zeitweiliges Untertauchen; 8: geschützt gegen dauerhaftes Untertauchen. Das Gehäuse kann beispielsweise wenigstens der Schutzart IP 65, wenigstens IP 66, wenigstens IP 67 oder wenigstens IP 68 entsprechen.

Das Gehäuse bildet ein erstes Gehäusekompartiment. Das Gehäuse kann ein zweites oder weitere Gehäusekompartimente bilden. Das erste Gehäusekompartiment ist zur druckfesten Kapselung elektrischer Komponenten für eine Umgebung mit explosiver oder entzündlicher Atmosphäre eingerichtet und nimmt dem Primäranschluss auf. Vorzugsweise nimmt das erste Gehäusekompartiment den Primäranschluss vollständig auf. Insbesondere ist ausschließlich das erste Kompartiment des Gehäuses zur druckfesten Kapselung elektrischer Komponenten für eine Umgebung mit explosiver oder entzündlicher Atmosphäre eingerichtet. Eine Umgebung mit explosiver oder entzündlicher Atmosphäre kann beispielsweise eine Atmosphäre entsprechend der Zone 0 oder der Zone 1 sein. Gemäß einer Ausführung eines Feldgeräts ist das erste Gehäusekompartiment in wenigstens einem Abschnitt durch eine Außenwand des Gehäuses begrenzt. Das erste Gehäusekompartiment kann abschnittsweise durch zwei oder mehr, drei oder mehr, insbesondere vier oder fünf Außenwände des Gehäuses begrenzt sein. Ein Feldgerät, dessen erstes Gehäusekompartiment in wenigstens einem Abschnitt durch eine Außenwand des Gehäuses begrenzt ist, kann eine Durchführung beispielsweise für den Eintritt einer Leitung zum Anschluss an den elektrischen Primäranschluss in dem Abschnitt durch die Außenwand des Gehäuses aufweisen. Beispielsweise kann eine rohrförmig eingekapselte Trunk-Leitung durch die Außenwand zum Anschluss an den Primäranschluss geführt sein. Eine durch die Außenwand des Gehäuses in das erste Gehäusekompartiment geführte Leitung kann insbesondere als IEC 61158 Typ A Feldbus Kabel gebildet sein. Durch dieselbe oder eine andere das Gehäusekompartiment begrenzende Außenwand des Gehäuses kann eine Leitung insbesondere zur kombinierten Datenkommunikation und Leistungsübergabe zu einem elektrischen Tertiäranschluss im ersten Gehäusekompartiment geführt sein.

Eine elektrische Komponente ist im allgemeinen eine Komponente, die zur Leistungs- und/oder Datenverarbeitung im Normalbetrieb mit Elektrizität versorgt ist oder zumindest sein kann. Eine elektrische Komponente kann beispielsweise eine elektronische Rechenvorrichtung wie ein Mikrocontroller oder ein Mikroprozessor sein; ein elektropneumatischer Wandler, ein analog-digital-Wandler; digital-analog-Wandler; eine elektronische Signalverarbeitungsvorrichtungen eine Datenübertragungseinrichtung und/oder eine Laststeuerungseinrichtung oder dergleichen sein.

In dem Abschnitt der Außenwand des Gehäuses, welche das erste Gehäusekompartiment begrenzt, kann ein brand- und/oder explosionsbeständiger Durchtritt für die Leitung zur Anschluss an den Primäranschluss im Inneren des ersten Gehäusekompartiments vorgesehen sein.

Die wenigstens zwei Sekundäranschlüsse sind außerhalb des ersten Gehäusekompartiments angeordnet. Vorzugsweise sind alle elektrischen Sekundäranschlüsse zur kombinierten Datenkommunikation, insbesondere Digitaldatenkommunikation, und Leistungsübergabe außerhalb einer druckfesten Kapselung elektrischer Komponenten für eine Umgebung mit explosiver oder entzündlicher Atmosphäre angeordnet, insbesondere außerhalb des ersten Gehäusekompartiments. Es ist denkbar, dass eine Gruppe elektrischer Sekundäranschlüsse zu kombinierten Datenkommunikation und Leistungsübergabe außerhalb einer druckfesten Kapselung elektrischer Komponenten für eine Umgebung mit explosiver oder entzündlicher Atmosphäre angeordnet ist und eine Gruppe elektrischer Tertiäranschlüsse zur kombinierten Datenkommunikation und Leistungsübergabe innerhalb einer druckfesten Kapselung elektrischer Komponenten für eine Umgebung mit explosiver oder entzündlicher Atmosphäre angeordnet ist, insbesondere in dem ersten Gehäusekompartiment. Die elektrischen Sekundäranschlüsse der ersten Gruppe sind insbesondere alle zur Leistungsübergabe bei einem zweiten Leistungsniveau von nicht mehr als 1 W, insbesondere nicht mehr als 0,5 W pro Sekundäranschluss eingerichtet. Ein elektrischer Tertiäranschluss oder mehrere elektrische Sekundäranschlüsse, insbesondere alle elektrischen Sekundäranschlüsse der zweiten Gruppe können zur Leistungsübergabe bei einem dritten oder zweiten Leistungsniveau kleiner als 10 W, insbesondere von nicht mehr als 5 W, und größer als 0,5 W, insbesondere wenigstens 1 W, eingerichtet sein.

Erfindungsgemäß führt wenigstens eine insbesondere potentialfreie trennende Schutzbrücke aus dem ersten Gehäusekompartiment heraus um den Primäranschluss mit den wenigstens zwei Sekundäranschlüssen zu verbinden. Es kann bevorzugt sein, dass ausschließlich eine Verbindung von dem Primäranschluss zu den wenigsten zwei Sekundäranschlüssen mittels der Schutzbrücke realisiert ist. Beispielsweise kann die Schutzbrücke aus dem ersten Gehäusekompartiment, in dem der Primäranschluss untergebracht ist, zu einem anderen Gehäusekompartiment übertreten, in dem die wenigstens zwei Sekundäranschlüsse untergebracht sind, um den Primäranschluss mit den Sekundäranschlüssen zu verbinden. Die Schutzbrücke durchdringt die druckfeste Kapselung für eine Umgebung mit explosiver oder entzündlicher Atmosphäre, die das erste Gehäusekompartiment definiert, um eine elektrische Verbindung insbesondere zu kombinierten Datenkommunikation und Leistungsübergabe von dem Primäranschluss zu den wenigstens zwei Sekundäranschlüssen zu erlauben. Es sei klar, dass die Datenkommunikation und Leistungsübergabe von dem Primäranschluss zu den wenigstens zwei Sekundäranschlüssen vermittels einer Datenvermittlungseinrichtung und/oder einer Laststeuereinrichtung indirekt erfolgen kann. Die Schutzbrücke von dem ersten Gehäusekompartiment nach außen, insbesondere in ein zweites Gehäusekompartiment, ist dazu eingerichtet, einen inneren Brand oder eine innere Explosion in dem ersten Gehäusekompartiment einzudämmen und einen Durchschlag oder Übersprung in den Außenraum und/oder weitere Gehäusekompartimente, insbesondere das zweite Gehäusekompartiment sicher zu unterbinden.

Gemäß einer Ausführung eines Feldgeräts bildet das Gehäuse wenigstens ein weiteres Gehäusekompartiment, in dem wenigstens ein Sekundäranschluss angeordnet ist. Das wenigstens eine weitere Gehäusekompartiment ist nicht als druckfeste Kapselung elektrischer Komponenten für eine Umgebung mit explosiver oder entzündlicher Atmosphäre eingerichtet. Insbesondere ist das weitere Gehäusekompartiment innerhalb des Gehäuses zur staub- und/oder wassergeschützten Unterbringung elektrischer Komponenten angeordnet. Vorzugsweise bildet das Gehäuse zur staub- und/oder wassergeschützten Unterbringung elektrischer Komponenten das wenigstens eine weitere Gehäusekompartiment. Das weitere Gehäusekompartiment kann die selbe oder eine andere Schutzart, beispielsweise IP65, aufweisen wie das erste Gehäusekompartiment.

Gemäß einer Ausführung eines Feldgeräts, die mit den vorigen kombinierbar ist, umfasst die Schutzbrücke eine galvanische Trennung, wie einen Optokoppler und/oder einen Induktivkoppler. Alternativ oder zusätzlich kann die Schutzbrücke eine elektrische Leitungsbarriere umfassen. Eine elektrische Leitungsbarriere kann in dem ersten Gehäusekompartiment angeordnet sein und die Leistungsdichte der mittels der elektrischen Schutzbrücke aus dem ersten Gehäusekompartiment heraustretenden Leitung derart limitieren, dass ein sicherer Schutz gegen eine Entzündung einer explosiven oder brennbaren Atmosphäre außerhalb des ersten Gehäusekompartiments sichergestellt ist. Die Schutzbrücke ist dazu ausgelegt, einen elektrischen Überschlag von elektrischen Komponenten innerhalb des ersten Gehäusekompartiments zu elektrischen Komponenten außerhalb des ersten Gehäusekompartiments zu verhindern. Die Schutzbrücke kann wenigstens eine Sicherungseinrichtung gegen Überspannungen und/oder Transienten aufweisen. Die Schutzbrücke eines Feldgeräts kann beispielsweise pro elektrischem Sekundäranschluss je einen Optokoppler und/oder je einen Induktivkoppler aufweisen.

Insbesondere kann die Schutzbrücke des Feldgeräts pro Sekundäranschluss je einen Datenkoppler, beispielsweise einen Optokoppler und/oder Induktivkoppler, zur Datenkommunikation von dem Primäranschluss zu dem jeweiligen Sekundäranschluss aufweisen. Erfindungsgemäß weist die Schutzbrücke pro Sekundäranschluss einen sicheren Leistungskoppler, insbesondere einen Induktivkoppler, zur Leistungsübergabe von dem Primäranschluss an den jeweiligen Sekundäranschluss auf. Der Datenkoppler und/oder der Leistungskoppler kann eine Sicherheitseinrichtung gegen Überspannungen und/oder Transienten aufweisen. Insbesondere realisiert die Schutzbrücke einen potentialfreie elektrische Verbindung zwischen den wenigstens zwei elektrischen Sekundäranschlüssen und dem elektrischen Primäranschluss beziehungsweise zwischen den wenigstens zwei elektrischen Sekundäranschlüssen und einer eventuellen Datenvermittlungseinrichtung und/oder Laststeuerungseinrichtung. Die Schutzbrücke kann wenigstens einen Datenkoppler pro Sekundäranschluss und/oder wenigstens einen Leistungskoppler pro Sekundäranschluss aufweisen.

Die Schutzbrücke ist dazu eingerichtet, dass jedem elektrischen Sekundäranschluss zur Datenkommunikation und Leistungsübergabe ein Leistungsniveau von nicht mehr als 10 W, insbesondere nicht mehr als 5 W, vorzugsweise nicht mehr als 1 W, besonders bevorzugt nicht mehr als 0,5 W bereitsteht. Ein Leistungskoppler der Schutzbrücke kann dazu eingerichtet sein, einem an den Leistungskoppler angeschlossenen elektrischen Sekundäranschluss ein Leistungsniveau von wenigstens 10 mW, insbesondere wenigstens 100 mW, vorzugsweise wenigstens 250mW bereitzustellen. Ein Datenkoppler kann dazu eingerichtet sein, einem Sekundäranschluss ein Leistungsniveau von nicht mehr als 250 mW, insbesondere nicht mehr als 100 mW, vorzugsweise nicht mehr als 50 mW, besonders bevorzugt nicht mehr als 1 mW bereitzustellen. An demselben elektrischen Sekundäranschluss des Feldgeräts können sowohl ein Datenkoppler als auch ein Leistungskoppler angeschlossen sein.

Gemäß einer Ausführung eines Feldgeräts kann man die mit dem vorigen kombinierbar ist, umfasst die leistungsverteilende Datenvermittlungseinrichtung eine Laststeuerungseinrichtung und eine Datenübertragungseinrichtung, insbesondere eine Paketdatenvermittlungseinrichtung, zum Übermitteln von digitalen Daten. Insbesondere ist die Laststeuerungseinrichtung und/oder die Datenübertragungseinrichtung in dem ersten Gehäusekompartiment aufgenommen. Die Laststeuerungseinrichtung und/oder die Datenübertragungseinrichtung können in einem Gehäusekompartiment zur druckfesten Kapselung elektrischer Komponenten für eine Umgebung mit explosiver oder entzündlicher Atmosphäre untergebracht sein. Insbesondere ist die Laststeuerungseinrichtung einerseits mit dem elektrischen Primäranschluss und andererseits mit den wenigstens zwei elektrische Sekundäranschlüssen verbunden. Die Laststeuerungseinrichtung kann dazu eingerichtet sein, ausgehend von der Leistungsaufnahme bei dem ersten Leistungsniveau Leistung zur Übergabe bei dem zweiten Leistungsniveau bereitzustellen. Die Datenübertragungseinrichtung, insbesondere die Paketdatenübertragungseinrichtung, kann dazu ausgelegt sein, Datenkommunikation, insbesondere Digitaldatenkommunikation von dem Primäranschluss zu wenigstens einem der wenigstens zwei Sekundäranschlüsse zu gewährleisten. Die Datenübertragungseinrichtung kann einerseits an den Primäranschluss angeschlossen sein. Die Datenübertragungseinrichtung ist mit den wenigstens zwei Sekundäranschlüssen signalbetragungsgemäß verbunden. Die Datenübertragungseinrichtung kann dazu eingerichtet sein, einen an wenigstens einem Primäranschluss und/oder Sekundäranschluss anliegenden elektrischen Zustand zu erfassen und/oder einen vorbestimmten elektrischen Zustand an wenigstens einem elektrischen Primäranschluss und/oder Sekundäranschluss bereitzustellen. Die Datenübertragungseinrichtung kann dazu ausgelegt sein, einen an einem Primär- und/oder Sekundäranschluss erfassten elektrischen Zustand in einen digitalen Datensatz umzuwandeln. Die Datenübertragungseinrichtung kann alternativ oder zusätzlich dazu eingerichtet sein, entsprechend einen digitalen Datensatz an einen oder mehreren Primär- und/oder Sekundäranschluss ein elektrisches Signal bereitzustellen, das sich in den digitalen Datensatz decodieren lässt. Die Datenübertragungseinrichtung kann wenigstens einen analog-digital-Wandler und/oder wenigstens einen digital-analog-Wandler umfassen.

Vorzugsweise ist die Datenvermittlungseinrichtung, insbesondere mittels der Datenübertragungseinrichtung zur bidirektionalen Datenkommunikation am Primäranschluss und/oder an den wenigstens zwei Sekundäranschlüssen eingerichtet. Die Datenübertragungseinrichtung kann eine Filterung und/oder Trennung von elektrischen Datensignalen ausgehend von dem Primäranschluss zu einem bestimmten der wenigstens zwei Sekundäranschlüsse realisieren. Beispielsweise kann die Datenübertragungseinrichtung dazu ausgestaltet sein, vermittels des Primäranschlusses empfangene Daten, insbesondere Digitaldaten, anhand eines oder mehrerer vorbestimmter Kriterien einem bestimmten der wenigstens zwei Sekundäranschlüsse zuzuordnen. Ein Feldgerät mit einer Laststeuerungseinrichtung und einer Datenübertragungseinrichtung kann dazu ausgelegt sein, die elektrische Versorgungsleistung bei einem ersten oder zweiten Leistungsniveau zu trennen von elektrischen Datensignalen.

Gemäß einer anderen Ausführung, die mit der vorherigen kombinierbar ist, ist in dem Gehäuse, insbesondere in dem ersten Gehäusekompartiment, wenigstens eine elektronische oder mechatronische Regelkreisvorrichtung zum Erfassen und/oder Beeinflussen einer Prozessgröße der prozesstechnischen Anlage angeordnet. Insbesondere ist die weitere und/oder zusätzliche Regelkreisvorrichtung aus der über den Primäranschluss zugeführten elektrischen Leistung versorgt. Die Regelkreisvorrichtung kann dazu eingerichtet sein, die Prozessgröße direkt oder mittelbar zu erfassen und/oder zu beeinflussen. Eine Regelkreisvorrichtung kann beispielsweise ein Sensor, wie ein Positionssensor, ein Drucksensor, ein Strömungs- oder Durchflusssensor, ein Temperatursensor oder dergleichen sein, der basierend auf einem Prozesszustand ein Sensorsignal erzeugt und übermittelt, beispielsweise an einer Steuerungs- und/oder Regelungsvorrichtung. Der Sensor erzeugt ein Ist-Signal für die Steuerungs- und/oder Regelungsvorrichtung, insbesondere die Steuerungs- und/oder Regelungselektronik. Die Regelkreisvorrichtung kann eine Steuerungs- und/oder Regelungselektronik umfassen. Eine Steuerungs- und/oder Regelungselektronik kann dazu eingerichtet sein, ein von einer übergeordneten Steuereinheit, beispielsweise einer Zentraleinheit, wie einer Leitwarte einer prozesstechnischen Anlage, erhaltenes Soll-Signal zu verarbeiten, um ein Steuer- und/oder Regelsignal an einen zum Betätigen eines Aktors der prozesstechnischen Anlage bereit zu stellen.

Eine Steuerungs- und/oder Regelungselektronik kann dazu eingerichtet sein, ein Steuerungs- und/oder Regelungssignal basierend auf einem Soll-Signal und einem Ist-Signal zu erzeugen. Eine Steuerungs- und/oder Regelungselektronik kann beispielsweise durch einen digitalen Stellungsregler realisiert sein, der eine Rechenvorrichtung, eine Speichervorrichtung und wenigstens einen Signaleingang und wenigstens einen Signalausgang aufweist. Die Rechenvorrichtung einer Steuerungs- und/oder Regelungselektronik kann dazu ausgelegt sein, gemäß einer steuerungs- und/oder Regelungsroutine, die in einem Speicher hinterlegt sein kann, mit einem Prozessor oder dergleichen auf Basis eines Soll-Signals sowie gegebenenfalls eines Ist-Signals ein Steuerungs- und/oder Regelungssignal zu bestimmen. Eine Regelungsroutine kann beispielsweise gemäß einer PID-Regelungsroutine, einer zweiPunkt Regelungsroutine, einer drei-Punkt-Regelungsroutine oder dergleichen oder einer Kombination daraus realisiert sein. Die Steuerungs- und/oder Regelungselektronik kann dazu eingerichtet sein, die Regelungsroutine anzuwenden. Die Regelkreisvorrichtung kann einen Wandler, beispielsweise einem elektropneumatischen Wandler umfassen. Ein elektropneumatischer Wandler kann dazu vorgesehen sein, basierend auf einem elektrischen Steuerungs- und/oder Regelungssignal ein entsprechendes pneumatisch Steuerungs- und/oder Regelungssignal bereitzustellen, insbesondere für einen pneumatischen Aktor. Das Feldgerät gemäß dieser Ausgestaltung eignet sich besonders für Anwendungen, bei denen nur begrenzter Bauraum bereit steht. Indem sowohl der Primäranschluss als auch wenigstens eine Regelkreisvorrichtung sowie gegebenenfalls eine Datenübertragungseinrichtung und/oder eine Laststeuerungseinrichtung in einem, insbesondere demselben ersten, Gehäusekompartiment zur druckfesten Kapselung der vorgenannten elektrischen Komponenten für eine Umgebung mit explosiver oder entzündlicher Atmosphäre untergebracht sind kann der erforderliche Aufwand zur Sicherung der mehreren elektrischen Komponenten deutlich verringert und dadurch Kosten gespart werden.

Gemäß einer besonderen Ausführung eines Feldgerätes für eine prozesstechnische Anlage, wie eine Chemieanlage, beispielsweise eine Raffinerie, ein Kraftwerk, beispielsweise ein Nuklearkraftwerk, eine Lebensmittel verarbeitende Anlage, oder dergleichen das ein Gehäuse zur staub- und/oder wassergeschützten Unterbringung elektrischer Komponenten aufweist, sind sowohl eine leistungsverteilende Datenvermittlungseinrichtung mit einem Primäranschluss und wenigstens zwei elektrischen Sekundäranschlüssen als auch wenigstens eine elektronische oder mechatronische Regelkreisvorrichtung zum Erfassen und/oder Beeinflussen einer Prozessgröße einer prozesstechnischen Anlage untergebracht in dem Gehäuse. Erfindungsgemäß ist die leistungsverteilende Datenvermittlungseinrichtung, die in dem Gehäuse untergebracht ist, ein APL-Field-Switch.

Bei der besonderen Ausführung des Feldgerätes kann ein zur Leistungsaufnahme bei einem ersten Leistungsniveau größer als 10 Watt konfigurierter elektrischer Primäranschluss vorgesehen sein. Bei dem besonders ausgeführten Feldgerät können wenigstens zwei elektrische Tertiäranschlüsse in dem Gehäuse zur kombinierten Datenkommunikation und Leistungsübergabe bei einem zweiten Leistungsniveau kleiner als 10 Watt pro Sekundäranschluss vorgesehen sein. Bei der besonderen Ausgestaltung des Feldgeräts kann die insbesondere zusätzliche elektronische oder mechatronische Regelkreisvorrichtung insbesondere ausschließlich aus der über den Primäranschluss zugeführten elektrischen Leistung versorgt sein. Diese besondere Ausführung des Feldgerätes kann mit den vorherigen Ausführungen wie auch den nachfolgend beschriebenen Ausführungen beliebig kombiniert sein. Die besondere Ausgestaltung eines Feldgerätes kann insbesondere realisiert sein durch ein Feldgerät, das in demselben Gehäuse zum Schutz vor Staub und/oder Wasser sowohl eine leistungsverteilende Datenvermittlungseinrichtung in Form eines APL-Field-Switch, insbesondere gemäß IEEE P 802.3cg, als auch eine Regelkreisvorrichtung zum Erfassen und/oder Beeinflussen einer Prozessgröße der prozesstechnischen Anlage aufnimmt.

Gemäß einer Weiterbildung ist die Regelkreisvorrichtung mittels der Laststeuerungseinrichtung insbesondere über einen zu kombinierten Datenkommunikation, insbesondere Digitaldatenkommunikation, und Leistungsübergabe bei dem zweiten Leistungsniveau kleiner als 1 Watt, insbesondere nicht mehr als 0,5 Watt, eingerichteten Tertiäranschluss, der im ersten Gehäusekompartiment untergebracht ist, mit elektrischer Leistung versorgt.

Gemäß einer Weiterbildung ist die Regelkreisvorrichtung ein Regler zur Regelung eines Stellgerätes. Der Regler weist wenigstens einen Signaleingang zum Empfangen eines Ist-Signals, wie ein Ist-Stellungssignal, bezüglich des Stellgerätes und einen Ausgang zum Betätigen des Stellgerätes auf. Das Stellgerät kann ein zum steuerbaren Eingriff einen technischen Prozess ausgestaltetes Gerät sein. Das Stellgerät ist vorzugsweise außerhalb des Gehäuses angeordnet. Das Stellgerät kann ein eigenes Stellgeräte-Gehäuse aufweisen, welches zur staub- und/oder wassergeschützten Unterbringung elektrischer StellgeräteKomponenten ausgestaltet ist. Das Stellgerätegehäuse kann zur druckfesten Kapselung elektrischer Stellgerätekomponenten für eine Umgebung mit explosiver oder entzündlicher Atmosphäre eingerichtet sein.

Das Stellgerät kann eigensicher ausgestaltet sein. Ein eigensicheres Stellgerät oder eine andere eigensichere elektrische Komponente kann dergestalt intrinsisch sicher ausgestaltet sein, dass selbst bei einem vom Normalbetrieb abweichenden Fehlerfall kein unsicherer Zustand auftritt. Ein Fehlerfall beschreibt beispielsweise eine Situation, für die ein entzündungs- oder anderes Risiko besteht: Beispielsweise kann als Risiko die Möglichkeit der Funkenbildung beim Schließen eines elektrischen Stromkreises innerhalb eines explosionsgefährdeten Bereichs als Risiko betrachtet werden. Ein eigensicheres Stellgerät oder andere elektronische Komponente kann gemäß der Zündschutzart Eigensicherheit realisiert sein ("Ex i" beispielsweise gemäß IEC-EN 60079-11 Teil 11, Teil 14 und/oder Teil 25). Ein eigensicheres Stellgerät oder andere eigensichere elektronische Komponenten sind derart ausgestaltet, dass die anliegende Stromstärke und Spannung derart begrenzt ist, dass eine Entzündung von explosionsfähigem Brennstoff-/Luftgemischen sowohl durch Funken als auch durch Erwärmung ausgeschlossen ist, insbesondere im Normalbetrieb, zum Beispiel beim An- und/oder Abklemmen von Bauteilen, und/oder in einem Störungsfall, zum Beispiel bei einem Drahtbruch oder einem Kurzschluss. Eine Begrenzung der Spannung kann beispielsweise durch einen elektrischen Wiederstand, eine Zener-Barriere und/oder eine elektronische Strombegrenzungs-Einrichtung der eigensicheren elektronischen Komponente oder des eigensicheren Stellgerätes realisiert sein.

Gemäß einer weiteren Weiterbildung des Feldgerätes ist die Regelkreisvorrichtung innerhalb des ersten Gehäusekompartimentes angeordnet und weist einen innerhalb des ersten Gehäusekompartiments angeordneten pneumatischen Ausgang zum Betätigen eines pneumatischen Aktors, insbesondere eines pneumatischen Stellantriebs, auf. Der pneumatische Ausgang der Regelkreisvorrichtung sowie gegebenenfalls ein pneumatischer Versorgungszugang derselben Regelkreisvorrichtung kann durch einen geschützten Pneumatik-Luftdurchgang realisiert sein. Ein geschützter Pneumatik-Luftdurchgang gewährleistet eine druckfeste Kapselung elektrischer Komponenten des Feldgerätes in dem ersten Gehäusekompartiment gegenüber einer Umgebung mit explosiver oder entzündlicher Atmosphäre. Der gesicherte Pneumatik-Luftdurchgang kann in dem Abschnitt des ersten Gehäusekompartiments realisiert sein, der durch eine Außenwand des Gehäuses realisiert ist. Ein pneumatischer Stellantrieb ist beispielsweise zum Betätigen eines Stellventils oder dergleichen vorgesehen.

Gemäß einer weiteren Weiterbildung des Feldgerätes umfasst die Regelkreisvorrichtung einen innerhalb des ersten Gehäusekompartiments angeordneten Positionssensor zum Erfassen der Stellung des Stellgeräts umfasst. Insbesondere ist Positionssensor zum Erfassen der Stellung einer Stellstange oder einer Stellwelle des Stellgeräts ausgestaltet. Vorzugsweise ist die Stellstange- oder welle ausschließlich vollständig außerhalb des ersten Gehäusekompartiments, insbesondere vollständig außerhalb des Gehäuses, angeordnet.

Insbesondere ist der Positionssensor berührungslos mit dem Stellgerät gekoppelt. Insbesondere kann die berührungslose Kopplung eine magnetische und/oder elektromagnetische Kopplung umfassen. Die berührungslose Kopplung umfasst vorzugsweise wenigstens einen insbesondere ortsfest mit der Stellstange oder -welle des Stellgeräts verbundenen, vorzugsweise daran ortsfest befestigten, Magneten oder Elektromagneten und eine mit dem Magneten oder Elektromagneten kooperierenden magnetempflindlichen Sensor, wie ein AMR, der innerhalb des ersten Gehäusekompartiments untergebracht ist. Es sei klar, das der Fachmann anstelle einer berührungslosen magnetischen oder elektromagnetischen Kopplung eine andere geeignete berührungslose Kopplung, wie eine optische Kopplung, einsetzen kann.

Alternativ oder zusätzlich ist der Positionssensor mechanisch mit dem Stellgerät gekoppelt. Die Außenwand des Gehäuses kann eine Durchführung für die mechanische Kopplung umfassen. Beispielsweise kann die mechanische Kopplung des Positionssensors eine Sensorwelle umfassen und die Außenwand des Gehäuses eine Drehdurchführung die Sensorwelle aufweisen. Die Sensorwelle kann sich aus dem ersten Gehäusekompartiment hinaus in dessen ungeschützte Umgebung zu dem Stellgerät, insbesondere der Stellstange- oder welle, erstrecken. Die Sensorwelle ist mechanisch mit dem Stellgerät, insbesondere der Stellstange- oder welle, verbunden. Die Drehdurchführung gewährleistet eine druckfeste Kapselung elektrischer Komponenten des Feldgerätes in dem ersten Gehäusekompartiment gegenüber einer Umgebung mit explosiver oder entzündlicher Atmosphäre.

Die Offenbarung betrifft auch ein System, das ein Feldgerät wie zuvor beschrieben umfasst sowie ein Stellgerät, insbesondere ein Stellventil, mit wenigstens einem außerhalb des Gehäuses des Feldgerätes angeordneten Wandler, insbesondere einem elektropneumatischen Wandler und/oder einem Ist-Signal-Geber, wie einem Positions- oder Stellungssensor, der einen elektrischen Signal-Ein- und/oder Ausgang aufweist, welcher mit einem Sekundäranschluss des Feldgerätes verbunden ist. Der Wandler ist vorzugsweise eigensicher ausgebildet. Der Wandler umfasst einen elektrischen Signal-Ein- und/oder Ausgang, der über eine externe Leitung zur Daten- und/oder Leistungsübertragung eingerichtet ist. Zwischen einem, insbesondere genau einem, Sekundäranschluss des Stellgerätes und dem Wandler ist wenigstens eine, insbesondere genau eine, externe Leitung zur Daten- und/oder Leistungsübertragung vorgesehen. Die externe Leitung zur Daten- und/oder Leistungsübertragung verbindet den außerhalb des Gehäuses angeordneten Wandler mit dem insbesondere innerhalb des Gehäuses, vorzugsweise in einem weiteren Gehäusekompartiment, angeordneten elektrischen Sekundäranschluss zur uni- oder bi-direktionalen Datenübertragung und/oder zur uni- und bi-direktionalen Leistungsübertragung. Der Wandler umfasst vorzugsweise ein Wandler-Gehäuse zur staubund/oder wassergeschützten Unterbringung der elektrischen Komponenten des Wandlers. Insbesondere ist das Wandler-Gehäuse zur druckfesten Kapselung elektrischer Wandler-Komponenten für eine Umgebung mit explosiver oder entzündlicher Atmosphäre eingerichtet ist. Ein Gehäuse zu druckfesten Kapselung kann beispielsweise ein explosionssicheres Gehäuse sein.

Der Wandler kann dazu eingerichtet sein, elektrische, beispielsweise analoge Signale von dem Feldgerät zu empfangen und umzuwandeln in Datensignale, insbesondere Steuerungs- und/oder Regelungssignale für ein Stellgerät, oder in beispielsweise pneumatische Steuerungs- und/oder Regelungssignale für ein pneumatisches Stellgerät. Der Wandler kann dazu eingerichtet sein, ein Datensignal für das Feldgerät auf Basis eines Prozesszustandes zu erzeugen. Beispielsweise kann der Wandler ein Positions- oder Stellungssensor, Drucksensor, Strömungssensor, Temperatursensor oder Ähnliches sein, der einen Prozesszustand, wie eine Stellung, einen Druck, eine Temperatur, eine Strömungsgeschwindigkeit, ein Strömungsvolumen, eine Vibration oder dergleichen erfasst und ein entsprechendes Datensignal zur Übermittlung an das Feldgerät erzeugt. Das von dem Wandler basierend auf einem Prozess-Zustand erzeugte Daten-Signal ist insbesondere ein Ist-Signal. Vorzugsweise ist die externe Leitung zur Daten- und/oder Leistungsübertragung als einfaches zweiadriges Kabel frei von einer rohrförmigen elektrischen Kapselung für eine Umgebung mit explosiver oder entzündlicher Atmosphäre ausgestaltet.

Weitere Merkmale, Eigenschaften und Vorteile der Erfindung werden durch die folgende Beschreibung bevorzugter Ausführungen deutlich gemacht, in denen zeigen:
- Figur 1: eine schematische Darstellung einer ersten Ausführung eines Feldgeräts;
- Figur 2: eine schematische Darstellung eines Systems mit einer anderen Ausführung eines Feldgeräts; und
- Figur 3: ein System mit einer weiteren Ausführung eines Feldgeräts.

Zur Vereinfachung der Lesbarkeit sind in der nachfolgenden Beschreibung bevorzugte Ausführungen für dieselben oder ähnlichen Komponenten die selben oder ähnliche Bezugszeichen verwendet.

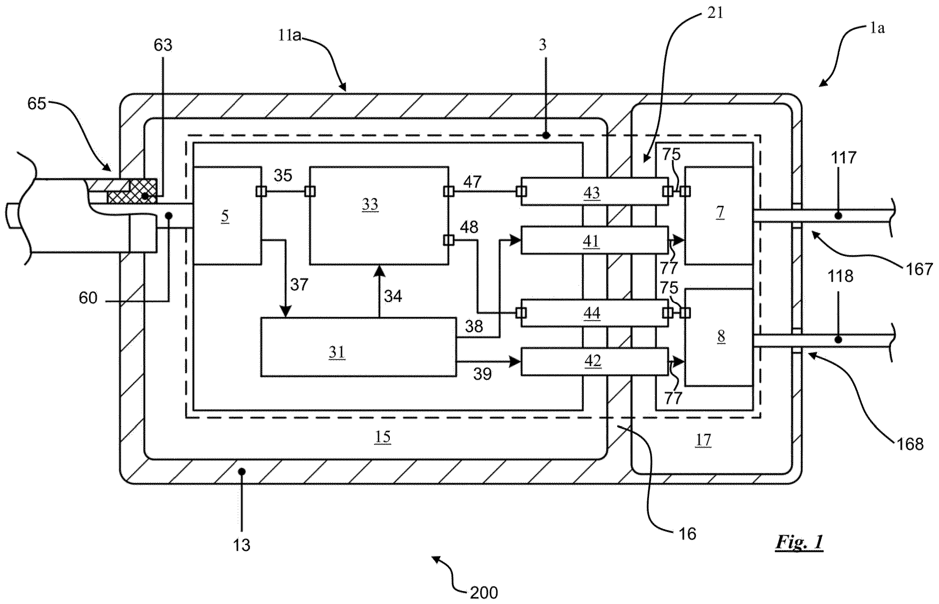

Das Feldgerät 1a umfasst als wesentliche Komponenten eine leistungsverteilende Datenvermittlungseinrichtung 3 mit einem elektrischen Primäranschluss 5 und wenigstens zwei elektrischen Sekundäranschlüssen 7, 8 sowie ein Gehäuse 11a zur staub- und/oder wassergeschützten Unterbringung elektrischer Komponenten, das ein erstes Gehäusekompartiment 15 bildet, das den Primäranschluss 5 aufnimmt. Die wenigstens zwei Sekundäranschlüsse 7, 8 sind in einem weiteren Gehäusekompartiment 17 des Gehäuses 11a untergebracht. Bei der in Figur 1 dargestellten bevorzugten Ausführung eines Feldgerätes 1a sind die elektrische Komponenten 5, 7 und 8 der leistungsverteilenden Datenvermittlungseinrichtung 3 sämtlichst innerhalb des Gehäuses 11a derart untergebracht, dass sie vor Staub und/oder Wasser aus der Umgebung des Feldgerätes insbesondere gemäß der Schutzart IP-65 oder höher geschützt sind.

Das erste Gehäusekompartiment 15, welches den Primäranschluss 5 vollständig aufnimmt, ist zur druckfesten Kapselung darin eingehauster elektrischer Komponenten für eine Umgebung 200 mit explosiver oder entzündlicher Atmosphäre eingerichtet, das weitere Gehäusekompartiment 17, in dem die Sekundäranschlüsse 7, 8 untergebracht sind, hingegen nicht.

Der elektrische Primäranschluss 5 ist zur Leistungsaufnahme bei einem ersten Leistungsniveau von größer als 10 Watt konfiguriert. Insbesondere kann der elektrische Primäranschluss 5 für eine Leistungsaufnahme bei einem ersten Leistungsniveau von 45 Watt und/oder entsprechend dem APL-Standard IEEE P 803.2cg als sogenannter TrunkAnschluss realisiert sein. Die einzelnen elektrischen Sekundaranschlüsse 7 oder 8 oder eventuelle weitere (nicht im Detail dargestellte) Sekundäranschlüsse sind zur kombinierten Datenkommunikation und Leistungsübergabe bei einem zweiten Leistungsniveau kleiner als 10 Watt pro Sekundäranschluss, insbesondere nicht mehr als 5 Watt pro Sekundäranschluss, vorzugsweise nicht mehr als 0,5 Watt pro Sekundäranschluss, ausgelegt.

Das Gehäuse 11a hat Gehäuseaußenwände 13, die den in Kompartimente 15, 17 unterteilten Innenraum des Gehäuses 11a von der Umgebung 200 des Feldgeräts 1a trennen. Die Gehäusewände 13 können beispielsweise mit Dichtungen ausgeführt sein, um der Schutzart IP-65 zu entsprechen. Nur das erste Gehäusekompartiment 15 ist zudem druckfest für eine Umgebung mit explosiver oder entzündlicher Atmosphäre ausgelegt, sodass eine Explosion, ein Brand oder ein Funken im Inneren des ersten Gehäusekompartiments 15 keine schädlichen Auswirkungen auf die Umgebung 200 außerhalb des ersten Gehäusekompartiments 15 hat. Selbst wenn die Umgebung 200 außerhalb des ersten Gehäusekompartiments 15 entsprechend der sogenannten Zone 0 oder Zone 1 mit einem entzündlichen oder explosiven Gas befüllt ist, ist durch die Kapselung des ersten Gehäusekompartiments 15 sichergestellt, dass eine Zündquelle oder gar eine Zündung im Inneren des ersten Gehäusekompartiments 15 sich nicht auf die Umgebung 200 außerhalb des ersten Gehäusekompartiments 15 auswirkt. Dadurch können im Inneren des ersten Gehäusekompartiments 15 elektrische Komponenten verwendet werden, wie der elektrische Primäranschluss 5, die nicht eigensicher sind, beispielsweise weil die ihnen bereitstehende Leistungsdichte einen zulässigen Grenzwert überschreitet. Die durch das erste Gehäusekompartiment 15 realisierte Kapselung gewährleistet, dass ein innerer Brand oder eine innere Explosion oder ein elektrischer Durchschlag oder ein elektrischer Übersprung in den Außenraum 200 oder das weitere Gehäusekompartiment 17 sicher unterbunden würde.

Das weitere Gehäusekompartiment 17 ist in der Umgebung 200 außerhalb des ersten Gehäusekompartiments 15 angeordnet. Innerhalb des zweiten Gehäusekompartiments 15 kann ein Gas oder Gasgemisch, das entflammbar oder explosionsgefährdet ist, vorhanden sein. Die innerhalb des zweiten Gehäusekompartiments 17 angeordneten elektrischen Komponenten, beispielsweise die elektrischen Sekundäranschlüsse 7, 8 sind zur kombinierten Datenkommunikation Leistungsübergabe sind, insbesondere eigensicher, für eine Leistungsübergabe bei einem Leistungsniveau von kleiner als 10 Watt pro Sekundäranschluss, insbesondere kleiner als 1 Watt, vorzugsweise nicht mehr als 0,5 Watt, ausgestaltet.

Das Innere des Gehäuses 11a ist durch eine Gehäuseinnenwand 16 unterteilt in einerseits das erste Gehäusekompartiment 15 und andererseits das weitere Gehäusekompartiment 17. Die Schutzart gegen Staub und Wasser können für alle Kompartimente 15, 17 etc. des Gehäuses 11a gleich sein. Alternativ ist es denkbar, dass das erste Gehäusekompartiment 15 und das weitere Gehäusekompartiment 17 gemäß unterschiedlicher Schutzarten gegen Staub und Wasser ausgelegt sind, wobei insbesondere das erste Gehäusekompartiment 15 seiner höheren Staub- und/oder Wasser-Dichtigkeit entsprechen kann als das weitere Gehäusekompartiment 17.

An dem elektrischen Primäranschluss 5 sind innerhalb des ersten Gehäusekompartiments 15 eine Laststeuerungseinrichtung 31 und eine Datenübertragungseinrichtung 33 angebunden. In der schematischen Darstellung gemäß Figur 1 sind bidirektionale Datenverbindungen durch Linien mit offenen Quadratenden dargestellt. In der schematischen Darstellung gemäß Figur 1 sind elektrische Leistungsversorgungsleitungen dargestellt als Linien mit auf einen Verbraucher gerichtetem Pfeilende. Die Richtung des Leistungsflusses ist durch die Pfeilrichtung verdeutlicht. Die Datenübertragungseinrichtung 33 ist mit einer bidirektionalen Datenübertragungsleitung 35 mit dem Primäranschluss 5 zur Übertragung von insbesondere digitalen Daten verbunden. Die Leistungssteuerungseinrichtung 31 wird ausgehend von dem Primäranschluss 5 über eine Versorgungsleitung 37 mit elektrischer Leistung versorgt. Ausgehend von der Laststeuerungseinrichtung 31 werden elektrische Komponenten der Datenvermittlungseinrichtung 3 über verschiedene Versorgungsleitungen 36, 38, 39 mit elektrischer Energie versorgt.

Durch die Gehäuse-Innenwand 16 führt eine Schutzbrücke 21 aus dem ersten Gehäusekompartiment 15 zu den elektrischen Sekundäranschlüssen 7 und 8. Im Unterschied zu einer schlichten elektrischen Anschlussleitung gewährleistet die Schutzbrücke 21 durch die Verwendung sicherer Daten- und/oder Leistungskoppler 41, 42, 43, 44, dass außerhalb des ersten Gehäusekompartiments 15 beispielsweise gemäß den Kriterien der Eigensicherheit, ein Schutz vor Entzündung und/oder Explosion um durch die dort befindlichen elektronischen Komponenten gewährleistet ist. Die Datenkoppler 43, 44 und die Leistungskoppler 41, 42 können beispielsweise eine galvanische Trennung umfassen. Die Datenkoppler 43 und 44 können beispielsweise als Optokoppler oder Induktivkuppler realisiert sein. Die Leistungskuppler 41, 42 können beispielsweise als Induktivkoppler realisiert sein. Es ist denkbar, dass ein Daten- und/oder Leistungskoppler 41, 42, 43 und/oder 44 eine elektrische Leistungsbarriere umfasst.

Ein Datenkoppler 43, 44 verbinden den jeweiligen Sekundäranschluss 7, 8 zur Datenkommunikation mit der Datenübertragungseinrichtung 33. Zwischen dem ersten Datenkoppler 43 und der Datenübertragungseinrichtung 33 ist im ersten Gehäusekompartiment 15 eine innere Datenleitung 47 vorgesehen. Der erste Datenkoppler 43 ist mit dem ersten Sekundäranschluss 7 mit einer äußeren Datenleitung 75 im zweiten Gehäusekompartiment 17 verbunden. Der zweite Datenkoppler 44 ist im ersten Gehäusekompartiment 15 mit einer inneren Datenleitung 48 mit der Datenübertragungseinrichtung 33 und in dem weiteren Gehäusekompartiment 17 mit einer äußeren Datenübertragungsleitung 75 mit dem zweiten Sekundäranschluss 8 verbunden.

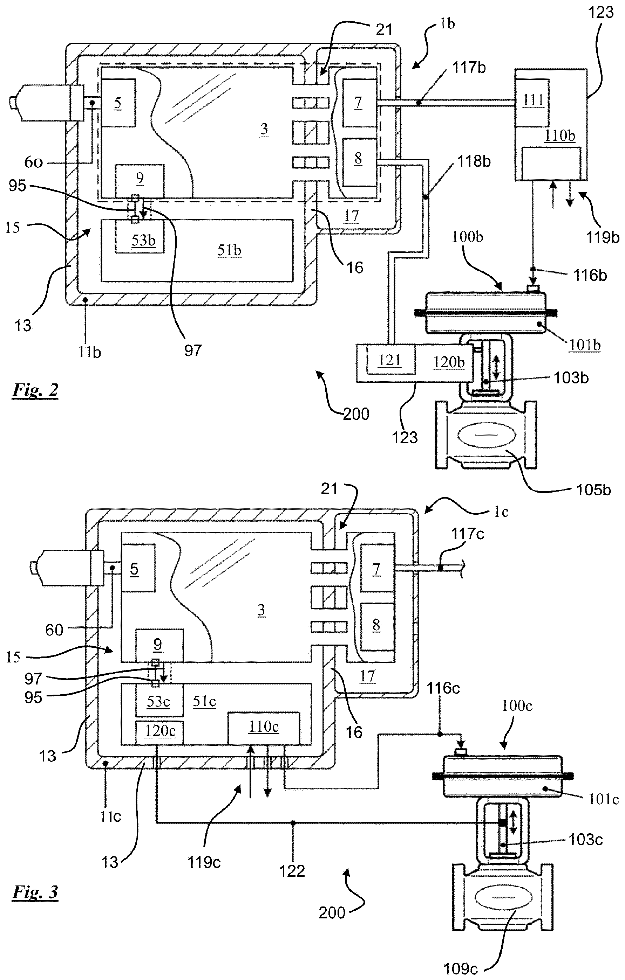

Von der Laststeuerungseinrichtung 31 führen innere Versorgungsleitungen 38, 39 zu dem ersten Leistungskoppler 41 bzw. dem zweiten Leistungskoppler 42. Der erste Leistungskoppler 41 ist mit einer externen Versorgungsleitung 77 mit dem ersten Sekundäranschluss 7 verbunden. Der zweite Leistungskoppler 42 ist mit einer äußeren Versorgungsleitung 77 mit dem zweiten Sekundäranschluss 8 verbunden. An die Sekundäranschlüsse 7 und 8 sind außerhalb des Gehäuses 11a externe Leitungen zu Daten- und/oder Leistungsübertragung 117a, 118a angeschlossen. An jede der externen Leitungen 117, 118 können eine oder mehrere Komponenten der prozesstechnischen Anlage, beispielsweise ein Stellungsregler oder ein Positionssensor, angebunden sein. Eine derartige Anbindung wird zur zweiten Ausführung eines Feldgerätes 1b bezüglich Figur 2 unten im Detail beschrieben. Die externen Leitungen 117a, 118a werden aus dem Gehäuse 11 durch einen jeweiligen Durchgang 167, 168 geführt, der (abgesehen von dem Schutz gegen Wasser und/oder gegen Staub) ohne besondere Sicherungen ausgeführt ist.

An einem Abschnitt 13 des Gehäuses 11a, welcher das erste Gehäusekompartiment 15 umgibt, ist ein Durchtritt 65 für eine Primärleitung 60 zur Leistungs- und Datenübertragung vorgesehen. Die Primärleitung 60 zur Daten- und Leistungsübertragung ist an den Primäranschluss 5 angebunden. Die Primärleitung 60 ist umgeben von einer rohrförmigen Kapselung 63 und dadurch zur sicheren Verwendung in einer Umgebung mit explosiver oder entzündlicher Atmosphäre eingerichtet. Durch Einsetzen der röhrenförmigen Kapselung 63 in den Durchtritt 65 in der Gehäuseaußenwand 13 wird die sichere Kapselung des ersten Gehäusekompartiments 15 nicht beeinträchtigt. Die Primärleitung 60 kann beispielsweise eine sogenannte Trunk-Leitung sein. Insbesondere kann die Primärleitung 60 als geschützte zweiadrige umschirmte Kabelung gemäß IEC 61158 Typ A Feldbus Kabel mit Schutzmantel ausgeführt sein.

In den Figuren 2 und 3 werden andere Ausführungen von Feldgeräten 1b, 1c dargestellt. Die Feldgeräte 1b und 1c unterscheiden sich von dem Feldgerät gemäß Figur 1a im Wesentlichen nur dadurch, dass innerhalb des ersten Gehäusekompartiments 15 zusätzlich zu den elektrischen Komponenten Primäranschluss 5, 31 Leistungsverteiler und Datenübermittlungseinrichtung 33 wenigstens eine elektronische oder mechatronische Regelkreisvorrichtung 51b, 51c untergebracht ist. Bei den Feldgeräten 1b und 1c gemäß der Figuren 2 und 3 ist die zusätzliche Regelkreisvorrichtung 51b, 51c durch ihre Unterbringung innerhalb der durch das erste Gehäusekompartiment 15 realisierten druckfesten Kapselung für eine Umgebung 200 mit explosiver oder entzündlicher Atmosphäre sicher geschützt. Bezüglich der übrigen Ausgestaltung des Feldgeräts 1b oder 1c und insbesondere der leistungsverteilenden Datenvermittlungseinrichtung 3 wird auf die obigen Ausführungen bezüglich des in Figur 1 dargestellten Feldgerätes 1a verwiesen.

Figur 2 zeigt ein Feldgerät 1b in dessen Gehäuse 11b zusätzlich zu der leistungsverteilenden Datenvermittlungseinrichtung 3, die bei den Ausführungen mit Tertiäranschluss 9 beispielsweise als APL-Field-Switch ausgestaltet sein kann, eine elektronische Regelkreisvorrichtung 51b vorgesehen ist, die als Regler, nämlich als Stellungsregler für ein Stellgerät 100b eingerichtet ist.

Das Stellgerät ist hier exemplarisch als pneumatisch betätigtes Stellventil 100b dargestellt. Das pneumatisch betätigte Stellventil 100b umfasst einen pneumatischen Stell-Aktor 101b und ein Stellventil 105b, das durch den pneumatischen Stell-Aktor 101b mittels einer kraftübertragenden Stellstange 103b betätigt wird. Gemäß einer alternativen Ausgestaltung kann ein Stellventil eine Stellwelle für ein rotatorisch bewegliches Ventil aufweisen (nicht im Detail dargestellt). Der Stellungsregler 51b ist mit der leistungsverteilenden Datenvermittlungseinrichtung 3 über einen Tertiäranschluss 9 verbunden. Der Tertiäranschluss 9 der leistungsverteilenden Datenvermittlungseinrichtung 3 kann beispielsweise als konventioneller Spur-Anschluss gebildet sein. Der Tertiäranschluss ist im Inneren des ersten Gehäusekompartiments 15 des Feldgerätes 1b vorgesehen. Der Tertiäranschluss 9 ist zur kombinierten Datenkommunikation, insbesondere digitaler Datenkommunikation, und Leistungsübergabe bei einem zweiten Leistungsniveau von nicht mehr als 10 Watt, insbesondere nicht mehr als 1 Watt, vorzugsweise nicht mehr als 0,5 Watt eingerichtet. Es sei klar, dass ein Feldgerät eine andere, größere Anzahl von Sekundäranschlüssen 7,8 und/oder Tertiäranschlüssen 9 aufweisen kann. Der Tertiäranschluss 9 verfügt über eine Datenübertragungsleitung 95 und eine Versorgungsleitung 97 zur Übertragung elektrischer Leistung von der Datenvermittlungseinrichtung 3 an die Regelkreisvorrichtung 51b. Die Regelkreisvorrichtung 51b hat eine Anschlussschnittstelle 53b, die als Leistungseingang wie auch als Signal-Ein- und-Ausgang wirkt.

Der Stellungsregler 51b kann mit seinem Signaleingang 53b ein Ist-Signal wie ein Ist-Stellungssignal von einem Positionssensor 120b des pneumatischen Stellgeräts 100b empfangen. An dem Signalausgang 53b des Stellungsreglers 51b kann der Stellungsregler ein Steuerungs- und/oder Regelungssignal für das Stellventil 100b ausgeben. An dem Signaleingang 53b kann der Stellungsregler 51b auch ein Soll-Signal von einer anderen, beispielsweise, zentralen, Steuervorrichtung, wie einer zentralen Leitwarte einer prozesstechnischen Anlage empfangen, wobei ein solches Soll-Signal dem Feldgerät 1b mittels der Primärleitung 60 bereitgestellt werden kann. Der Eingang 53b des Stellungsreglers 51b ist zur Leistungsversorgung des Stellungsreglers 51b mit dem Tertiäranschluss 9 verbunden.

Ein elektropneumatischer Wandler 110b zum Erzeugen eines pneumatischen Steuersignals auf Basis eines elektrischen Steuersignals von dem Stellungsregler 51b ist außerhalb des Gehäuses 11 des Feldgeräts 1b angeordnet. Der elektropneumatische Wandler 110b hat ein eigenes Wandler-Gehäuse 123. Der elektropneumatische Wandler ist mit einer Pneumatik-Leitung 116b an den pneumatischen Aktor 101b, beispielsweise einen einfach-wirkenden pneumatischen Antrieb mit Federrückstellung, angeschlossen. Der elektropneumatische Wandler 110b umfasst ferner einen Be- und/oder Entlüftungsanschluss 119b zur Verbindung mit einer Druckluftquelle beziehungsweise -Senke.

Der elektropneumatische Wandler 110b ist eigensicher. Der elektropneumatische Wandler 110b hat einen elektrischen Signal-Eingang 111, der über eine externe Leitung zu Daten- und/oder Leistungsübertragung 117b mit dem ersten Sekundäranschluss 7 des Feldgerätes 1b verbunden ist. Das Steuersignal von dem Stellungsregler 51b wird dem elektropneumatischen Wandler 110b mittels des Sekundäranschlusses 7 über die erste externe Leitung 117b übermittelt. Die Leitung zur Datenübertragung 117b kann unidirektional ausgestaltet sein, wenn der elektropneumatische Wandler 110b beispielsweise nicht über die Kapazität zum Erzeugen eigener Kommunikationssignale verfügt, also keine Signale an das Feldgerät 1b zurückzugeben vermag. Die Datenübertragungsleitung 117b von dem elektropneumatischen Wandler 110b an das Feldgerät 1b kann alternativ bidirektional ausgeführt sein, sodass der elektropneumatische Wandler 110b Signale, beispielsweise Ist-Signale, zum Beispiel bezogen auf einem Versorgungsdruck oder einen Diagnosecode eines Feldgerätes 1b, übermitteln kann. Signale von dem elektropneumatischen Wandler 110b können von der Datenvermittlungseinrichtung 3 über den Primäranschluss 5 und/oder den Tertiäranschluss 9 an andere elektronische Komponenten, wie eine zentrale Leitwarte oder den Stellungsregler 51b, übergeben werden.

Als weiteren Wandler ist bei dem in Figur 2 abgebildeten System ein Positionssensor 120b vorgesehen, der eine absolute oder relative Stellung der Stellstange 103b erfasst, um darauf basierend ein Stellungs-Ist-Signal zu erzeugen, um dies dem Stellungsregler 51b mitzuteilen. Der Positionssensor 120b verfügt über einen Signalausgang 121 zur Übertragung des Stellungs-Ist-Signals mittels einer zweiten externen Leitung 118b zur Daten- und/oder Leistungsübertragung 118b. Die Leitung 118b verbindet den zweiten Sekundäranschluss 8 des Feldgerätes 1b mit dem Signalausgang 121 des Positionssensors 120b. Der Positionssensor 120b ist in einem eigenen Wandler-Gehäuse 123 eingeschlossen.

Ein Stellgeräte- oder Wandler-Gehäuse 123 kann dazu eingerichtet sein, die darin enthaltenen elektrischen Komponenten staub- und/oder wassergeschützt gegenüber der Umgebung 200 abzuschirmen. Das Wandler-Gehäuse 123 kann zusätzlich oder alternativ zur druckfesten Kapselung der darin enthaltenen elektrischen Wandler-Komponenten für eine Umgebung 200 mit explosiver oder entzündlicher Atmosphäre eingerichtet sein. Das von dem Positionssensor 120b generierte Stellungs-Ist-Signal wird von der Datenvermittlungseinrichtung 3 an den Stellungsregler 51b über die Datenleitung 95 zwischen Tertiäranschluss 9 und Signal-Eingang 53b übergeben. Die Datenvermittlungseinrichtung 3 kann zusätzlich oder alternativ dazu ausgestaltet sein, ein Ist-Signal von einem Sensor, wie das Positions-Ist-Signal von dem Positionssensor 120b, über den Primäranschluss 5 und die daran angeschlossene Primärleitung 60 an andere Komponenten, wie eine zentrale Leitwarte, zu übermitteln.

Figur 3 zeigt eine weitere Ausführung eines Feldgeräts 1c, bei dem innerhalb des Gehäuses 11c zusätzlich zu der leistungsverteilenden Datenvermittlungseinrichtung 3 eine weitere Regelkreisvorrichtung 51c angeordnet ist. In der hier dargestellten exemplarischen Ausführung ist die Regelkreisvorrichtung 51c als Regler zur Regelung eines Stellgeräts 100c realisiert, nämlich am Beispiel von Figur 3 als pneumatischer Stellungsregler 51c für das pneumatisch betätigte Stellventil 100c. Der Regler 51c hat einen speziell ausgestalteten Signaleingang 120c zum Empfangen eines ist-Signals, nämlich eines Stellungs-ist-Signals bezüglich des Stellgeräts 100c. Der Signaleingang 120c ist über eine externen Leitung 122 mit dem Stellgerät 100c verbunden. Die externe Leitung 122 kann mit einer hier nicht im Detail dargestellten rohrförmigen Kapselung umgeben sein. Die Leitung 122 tritt aus dem ersten Gehäusekompartiment 15 des Gehäuses 11c aus, um den Signaleingang 120c mit dem Stellgerät 100c zu verbinden. Der Austritt der externen Leitung 122 kann als gesicherter Durchtritt durch eine Außenwand 13 des das sichere Kompartiment 15 umgebenden Gehäuses 11c ausgestaltet sein, sodass es die durch das erste Gehäusekompartiment 15 realisierte druckfeste Kapselung elektrischer Komponenten für eine Umgebung 200 mit explosiver oder entzündlicher Atmosphäre nicht kompromittiert. Die externe Leitung 122 kann den Signaleingang 120c beispielsweise mit einem Anschlagstaster an der Ventilstange 103c verbinden, welcher eine Öffnungsstellung und/oder eine Schließstellung des Ventils 105c erfasst.

Der elektropneumatische Stellungsregler 51c umfasst ferner einen elektropneumatischen Wandler 110c, der als Teil des elektropneumatischen Wandlers 51c ausgebildet und innerhalb des ersten Gehäusekompartiments 15 untergebracht ist. Zur Verbindung mit einer Druckluftquelle und/oder -senke ist die Außenwand 13 des Gehäuses 11c mit gesicherten Pneumatiköffnungen 119c versehen. Eine weitere sichere Pneumatiköffnung durch die Außenwand 13 des Gehäuses 11c ist vorgesehen für eine Pneumatikversorgungsleitung 116c zur Betätigung des pneumatischen Aktors 101c durch den elektropneumatischen Wandler 110c.

Es sei klar, dass alternativ zu den oben beschriebenen Ausführungen auch andere Alternativen, beispielsweise Mischungen, realisiert sein können, bei denen beispielsweise ein nicht näher dargestellter elektropneumatischer Stellungsregler mit einem innerhalb des ersten Gehäusekompartiments 15 angeordneten ist-Signal-Eingang realisiert ist, der über eine externe Leitung mit einem am Stellgerät angeordneten Zustandssensor verbunden ist, wobei der elektropneumatische Wandler des Stellungsreglers außerhalb des Gehäuses des Feldgeräts angeordnet ist.

Alternativ kann ein elektropneumatischer Wandler eines elektropneumatischen Stellungsreglers im Inneren des ersten Gehäusekompartiments 15 untergebracht sein und ein Zustandssensor über einen Sekundäranschluss indirekt mit dem Stellungsregler verbunden sein (nicht näher dargestellt).

Gemäß einer anderen denkbaren Alternative kann das Feldgerät mit einem darin angeordneten, berührungslosen, beispielsweise induktiven Positions- oder Stellungssensor vorgesehen und nah einer Stellstange oder -welle angeordnet sein. Insbesondere kann ein Magnet oder ähnlicher berührungsloser Positionssignalgeber an der Stellstange oder -welle positioniert sein und im ersten Gehäusekompartiment 15 ein berührungsloser Positionssensor zum Erfassen der Ist-Stellung des Stellgeräts (nicht im Detail dargestellt). Es ist denkbar, dass ein derartiges Feldgerät über einen elektropneumatischen Wandler zum Betätigen eines pneumatischen Antriebsstellventil verfügen kann, der entweder innerhalb des ersten Gehäusekompartiments oder außerhalb des ersten Gehäusekompartiments angeordnet sein kann.

Gemäß einer weiteren, nicht im Detail dargestellten alternativen Ausführung, die mit den vorgenannten kombinierbar ist, kann innerhalb des ersten Gehäusekompartiments ein Positionssensor vorgesehen sein, der mittels einer mechanischen Kopplung mit der Stellstange oder -welle verbunden ist, um eine Ist-Stellung des Stellgeräts zu erfassen. Insbesondere kann die Stellbewegung der Stellstange oder -welle in eine Drehbewegung einer Sensorwelle gewandelt werden und die Drehung mittels einer Drehdurchführung für die Sensorwelle in das erste Gehäusekompartiment 15 gelangen. Die Drehbewegung der Sensorwelle kann dann mittels des Positionssensors, zum Beispiel Magnetfeld-empfindlichen Positionssensors, aufgenommen werden.

Es sei klar, dass alternativ zu dem hier beschriebenen und dargestellten elektropneumatischen Wandler zum Betätigen eines pneumatischen Antriebs ein elektrischer Versorgungsausgang gegebenenfalls in Kombination mit einem elektrischen Steuerausgang zum Betätigen eines elektrischen Aktor vorgesehen sein kann. Ein elektrischer Stell-Aktor kann beispielsweise eine Stellstange oder -welle oder eine Pumpe antreiben.

Die in der vorstehenden Beschreibung den Figuren und den Ansprüchen offenbarte Merkmale können sowohl einzeln als auch in beliebiger Kombination für die Realisierung der Erfindung in den verschiedenen Ausgestaltungen von Bedeutung sein.

### Bezugszeichen:

- 1a, 1b, 1c: Feldgerät
- 3: leistungsverteilende Datenvermittlungseinrichtung
- 5: Primäranschluss
- 7,8: Sekundäranschluss
- 9: Tertiäranschluss
- 11a, 11b, 11c: Gehäuse
- 13: Gehäuseaußenwand
- 15: erstes Gehäusekompartiment
- 16: Gehäuseinnenwand
- 17: weiteres Gehäusekompartiment
- 21: Schutzbrücke
- 31: Laststeuerungseinrichtung
- 33: Datenübertragungseinrichtung
- 35: Datenübertragungsleitung
- 36, 37, 38, 39: Versorgungsleitung
- 41, 42: Datenkoppler
- 43, 44: Leistungskoppler
- 51b, 51c: Regelkreisvorrichtung
- 53b, 53c: Signal-Ein- und/oder Ausgang
- 60: Primärleitung
- 63: rohrförmige Kapselung
- 65: Durchtritt
- 75: Datenübertragungsleitung
- 77: Versorgungsleitung
- 100b, 100c: Stellgerät
- 101b, 101c: pneumatischer Stellantrieb
- 103b, 103c: Stellstange
- 105b, 105c: Stellventil
- 110b, 110c: elektropneumatischer Wandler
- 111, 112: Signal-Ein- und/oder Ausgang
- 116c: pneumatischer Signalausgang
- 117a, 118a: externe Daten- und /oder Leistungsübertragungsleitung
- 117b, 118b: externe Daten- und /oder Leistungsübertragungsleitung
- 117c: externe Daten- und /oder Leistungsübertragungsleitung
- 119c: gesicherte Pneumatiköffnung
- 120b: Positionssensor
- 121: Signalausgang
- 122: Leitung
- 123: Stellgeräte- oder Wandlergehäuse
- 167, 168: Durchgang
- 200: Umgebung

## Patentansprüche

1. Feldgerät (1a, 1b, 1c) für eine prozesstechnische Anlage, wie eine Chemieanlage, beispielsweise eine Raffinerie, ein Kraftwerk, beispielsweise ein Nuklearkraftwerk, eine Lebensmittel verarbeitende Anlage, umfassend:
eine leistungsverteilende Datenvermittlungseinrichtung (3) in Form eines APL-Field-Switches, die einen zur Leistungsaufnahme bei einem ersten Leistungsniveau größer als 10W konfigurierten elektrischen Primäranschluss (5) und wenigstens zwei elektrische Sekundäranschlüsse (7, 8) zur kombinierten Datenkommunikation und Leistungsübergabe bei einem zweiten Leistungsniveau kleiner als 10 W pro Sekundäranschluss (7, 8), aufweist, und
ein Gehäuse (11a, 11b, 11c) zur staub- und/oder wassergeschützten Unterbringung elektrischer Komponenten, das ein erstes Gehäusekompartiment (15) bildet, wobei das erste Gehäusekompartiment (15) zur druckfesten Kapselung elektrischer Komponenten für eine Umgebung mit explosiver oder entzündlicher Atmosphäre eingerichtet ist und den Primäranschluss (5) aufnimmt, und
wobei die wenigstens zwei Sekundäranschlüsse (7, 8) außerhalb des ersten Gehäusekompartiments (15) angeordnet sind,
wobei wenigstens eine Schutzbrücke (21) aus dem ersten Gehäusekompartiment (15) heraus führt, um den Primäranschluss (5) mit den wenigstens zwei Sekundäranschlüssen (7, 8) zu verbinden,
wobei die Schutzbrücke (21) pro Sekundäranschluss (7, 8) je wenigstens einen Datenkoppler zur Datenkommunikation von dem Primäranschluss (5) zu dem jeweiligen Sekundäranschluss (7, 8) und einen sicheren Leistungskoppler zur Leistungsabgabe von dem Primäranschluss (5) an den jeweiligen Sekundäranschluss (7, 8) aufweist und dazu eingerichtet ist, dass jedem elektrischen Sekundäranschluss (7, 8) zur Datenkommunikation und Leistungsübergabe ein Leistungsniveau von nicht mehr als 10 W bereitsteht.

2. Feldgerät (1a, 1b, 1c) nach Anspruch 1, **dadurch gekennzeichnet, dass** das Gehäuse (11a, 11b, 11c) wenigstens ein weiteres Gehäusekompartiment (17) bildet, in dem wenigstens ein Sekundäranschluss (7, 8) angeordnet ist, wobei das wenigstens eine weitere Gehäusekompartiment (17) nicht als druckfeste Kapselung elektrischer Komponenten für eine Umgebung mit explosiver oder entzündlicher Atmosphäre eingerichtet ist.

3. Feldgerät (1a, 1b, 1c) nach einem der vorstehenden Ansprüche, dadurch **gekenn**- **zeichnet**, dass das erste Gehäusekompartiment (15) in wenigstens einem Abschnitt durch eine Außenwand (13) des Gehäuses (11a, 11b, 11c) begrenzt ist.

4. Feldgerät (1a, 1b, 1c) nach einem der vorstehenden Ansprüche, dadurch **gekenn**- **zeichnet**, dass die Schutzbrücke (21) die druckfeste Kapselung durchdringt, die das erste Gehäusekompartiment (15) definiert und eine potentialfreie elektrische Verbindung zwischen den wenigstens zwei elektrischen Sekundäranschlüssen (7, 8) und dem elektrischen Primäranschluss (5) realisiert.

5. Feldgerät (1a, 1b, 1c) nach einem der vorstehenden Ansprüche, dadurch **gekenn**- **zeichnet**, dass die Schutzbrücke (21) eine galvanische Trennung, wie einen Optokoppler (41, 42) und/oder einen Induktivkoppler (43, 44), und/oder eine elektrische Leistungsbarriere umfasst.

6. Feldgerät (1a, 1b, 1c) nach einem der vorstehenden Ansprüche, dadurch **gekenn**- **zeichnet**, dass die leistungsverteilende Datenvermittlungseinrichtung (3) eine Laststeuerungseinrichtung (31) und eine Datenübertragungseinrichtung (33) umfasst und wobei die Laststeuerungseinrichtung (31) und/oder die Datenübertragungseinrichtung (33) in dem ersten Gehäusekompartiment (15) aufgenommen sind.

7. Feldgerat (1b, 1c) nach einem der vorstehenden Ansprüche, **dadurch gekennzeichnet, dass** in dem Gehäuse (11b, 11c) in dem ersten Gehäusekompartiment (15) wenigstens eine elektronische oder mechatronische Regelkreisvorrichtung (51b, 51c) zum Erfassen und/oder Beeinflussen einer Prozessgröße der prozesstechnischen Anlage, wobei die Regelkreisvorrichtung (51b, 51c), die aus der über den Primäranschluss (5) zugeführten elektrischen Leistung versorgt wird, untergebracht ist.

8. Feldgerät (1b, 1c) nach Anspruch 6 oder 7, **dadurch gekennzeichnet, dass** die Regelkreisvorrichtung (51b, 51c) mittels der Laststeuerungseinrichtung (31) über einen zur kombinierten Datenkommunikation und Leistungsübergabe bei dem zweiten Leistungsniveau kleiner als 10 W eingerichteten Tertiäranschluss (9), der im ersten Gehäusekompartiment (15) untergebracht ist, mit elektrischer Leistung versorgt ist.

9. Feldgerät (1b, 1c) nach Anspruch 7 oder 8, **dadurch gekennzeichnet, dass** die Regelkreisvorrichtung (51b, 51c) ein Regler, zur Regelung eines Stellgeräts (100b, 100c) ist, wobei der Regler wenigstens einen Signaleingang (53b; 53c) zum Empfangen eines Ist-Signal, wie ein Ist-Stellungs-Signal, bezüglich des Stellgeräts (100b, 100c) und einen Ausgang (53b, 53c, 110c) zum Betätigen des Stellgeräts (100b, 100c) aufweist.

10. Feldgerät (1c) nach Anspruch 9, **dadurch gekennzeichnet, dass** die Regelkreisvorrichtung (51c) einen innerhalb des ersten Gehäusekompartiments (15) angeordnet pneumatischen Ausgang (110c) zum Betätigen eines pneumatischen Aktuators (101c) eines pneumatischen Stellantriebs (100c) aufweist.

11. Feldgerät (1b, 1c) nach einem der Ansprüche 7 bis 10, **dadurch gekennzeichnet, dass** die Regelkreisvorrichtung (51b, 51c) einen innerhalb des ersten Gehäusekompartiments (15) angeordneten Positionssensor zum Erfassen der Stellung einer Stellstange (103b, 103c) oder einer Stellwelle des Stellgeräts (100b, 100c) umfasst, wobei der Positionssensor berührungslos und/oder mechanisch mit dem Stellgerät (100b, 100c) gekoppelt ist.

12. Feldgerat (1b, 1c) nach einem der vorstehenden Ansprüche, **dadurch gekennzeichnet, dass** an die Sekundäranschlüsse (7, 8) externe Leitungen zu Daten- und/oder Leistungsübertragung (117, 117b, 117c, 118, 118b) zum Anbinden einer oder mehrerer Komponenten der prozesstechnischen Anlage angeschlossen sind, die durch einen jeweiligen Durchgang (167, 168) aus dem Gehäuse (11a, 11b, 11b) geführt sind.

13. Feldgerat (1b, 1c) nach einem der vorstehenden Ansprüche, **gekennzeichnet durch** eine an den Primäranschluss (5) angebundene Primärleitung (60) zur Daten- und Leistungsübertragung von einer Steuervorrichtung, wie einer zentralen Leitwarte, der prozesstechnischen Anlage.

14. System, umfassend ein Feldgerät (1a, 1b, 1c) nach einem der vorstehenden Ansprüche und ein Stellgerät (100b, 100c) mit wenigstens einem außerhalb des Gehäuses (11a, 11b, 11c) angeordneten elektropneumatischen Wandler (110b) und/oder einem Ist-Signal-Geber, wie einem Stellungssensor (120b), der einen elektrischen Signal-Ein- und/oder Ausgang (111, 121) aufweist, welcher mit einem Sekundäranschluss (7, 8) des Feldgeräts (1a, 1b, 1c) verbunden ist.

## Claims

1. Field device (1a, 1b, 1c) for a process plant, such as a chemical plant, for example a refinery, a power plant, for example a nuclear power plant, a food processing plant comprising:
a power-distributing data communication device (3) in the form of an APL field switch, having an electrical primary connection (5) configured for power intake at a first power level greater than 10W and at least two electrical secondary connections (7, 8) for combined data communication and power delivery at a second power level less than 10W per secondary connection (7, 8), and
a housing (11a, 11b, 11c) for dust- and/or water-protected accommodation of electrical components, forming a first housing compartment (15), wherein the first housing compartment (15) is configured for pressure-resistant encapsulation of electrical components for an environment with explosive or flammable atmosphere and accommodates the primary connection (5), and
wherein the at least two secondary connections (7, 8) are arranged outside the first housing compartment (15),
wherein at least one protective bridge (21) leads out of the first housing compartment (15) to connect the primary connection (5) with the at least two secondary connections (7, 8),
wherein the protective bridge (21) for each secondary connection (7, 8) has at least one data coupler for data communication from the primary connection (5) to the respective secondary connection (7, 8) and a secure power coupler for power delivery from the primary connection (5) to the respective secondary connection (7, 8) and is configured such that each electrical secondary connection (7, 8) is provided with a power level of no more than 10W for data communication and power delivery.

2. Field device (1a, 1b, 1c) according to claim 1, **characterized in that** the housing (11a, 11b, 11c) forms at least one additional housing compartment (17) in which at least one secondary connection (7, 8) is arranged, wherein the at least one additional housing compartment (17) is not configured as a pressure-resistant encapsulation of electrical components for an environment with explosive or flammable atmosphere.

3. Field device (1a, 1b, 1c) according to one of the preceding claims, **characterized in that** the first housing compartment (15) is bounded in at least one section by an outer wall (13) of the housing (11a, 11b, 11c).

4. Field device (1a, 1b, 1c) according to one of the preceding claims, **characterized in that** the protective bridge (21) penetrates the pressure-resistant encapsulation that defines the first housing compartment (15) and realizes a potential-free electrical connection between the at least two electrical secondary connections (7, 8) and the electrical primary connection (5).

5. Field device (1a, 1b, 1c) according to one of the preceding claims, **characterized in that** the protective bridge (21) comprises a galvanic isolation, such as an optocoupler (41, 42) and/or an inductive coupler (43, 44), and/or an electrical power barrier.

6. Field device (1a, 1b, 1c) according to one of the preceding claims, **characterized in that** the power-distributing data communication device (3) comprises a load control device (31) and a data transmission device (33), and wherein the load control device (31) and/or the data transmission device (33) are accommodated in the first housing compartment (15).

7. Field device (1b, 1c) according to one of the preceding claims, **characterized in that** in the housing (11b, 11c) in the first housing compartment (15) at least one electronic or mechatronic control circuit device (51b, 51c) for detecting and/or influencing a process variable of the process plant, wherein the control circuit device (51b, 51c), which is supplied from the electrical power supplied via the primary connection (5) is accommodated.

8. Field device (1b, 1c) according to claim 6 or 7, **characterized in that** the control circuit device (51b, 51c) is supplied with electrical power via the load control device (31) through a tertiary connection (9) configured for combined data communication and power delivery at the second power level less than 10W, which is housed in the first housing compartment (15).

9. Field device (1b, 1c) according to claim 7 or 8, **characterized in that** the control circuit device (51b, 51c) is a controller for controlling an actuator device (100b, 100c), wherein the controller has at least one signal input (53b; 53c) for receiving an actual signal, such as an actual position signal, regarding the actuator device (100b, 100c) and an output (53b, 53c, 110c) for actuating the actuator device (100b, 100c).

10. Field device (1c) according to claim 9, **characterized in that** the control circuit device (51c) has a pneumatic output (110c) arranged within the first housing compartment (15) for actuating a pneumatic actuator (101c) of a pneumatic drive (100c).

11. Field device (1b, 1c) according to one of claims 7 to 10, **characterized in that** the control circuit device (51b, 51c) comprises a position sensor arranged within the first housing compartment (15) for detecting the position of a control rod (103b, 103c) or a control shaft of the actuator device (100b, 100c), wherein the position sensor is coupled contactlessly and/or mechanically with the actuator device (100b, 100c).

12. Field device (1b, 1c) according to one of the preceding claims, **characterized in that** external cables for data and/or power transmission (117, 117b, 117c, 118, 118b) are connected to the secondary connections (7, 8) for connecting one or more components of the process plant, which are led out of the housing (11a, 11b, 11b) through a respective passage (167, 168).

13. Field device (1b, 1c) according to one of the preceding claims, **characterized by** a primary line (60) connected to the primary connection (5) for data and power transmission from a control device, such as a central control room, of the process plant.

14. A system comprising a field device (1a, 1b, 1c) according to one of the preceding claims and an actuator device (100b, 100c) with at least one electropneumatic converter (110b) and/or an actual signal transmitter, such as a position sensor (120b), arranged outside the housing (11a, 11b, 11c), which has an electrical signal input and/or output (111, 121) connected to a secondary connection (7, 8) of the field device (1a, 1b, 1c).

## Revendications

1. Équipement de terrain (1a, 1b, 1c), destiné à une installation de procédés techniques, telle qu'une installation chimique, par exemple une raffinerie, une centrale électrique, par exemple une centrale nucléaire, une installation de traitement de produits alimentaires, comprenant :
un système de diffusion de données (3) distributeur de puissance, sous la forme d'un commutateur de terrain APL, qui comporte un connecteur électrique primaire (5), configuré à plus de 10 W pour une puissance absorbée à un premier niveau de puissance et au moins deux connecteurs électriques secondaires (7, 8) pour la communication de données et le transfert de puissance associés, à un deuxième niveau de puissance inférieur à 10 W par connecteur secondaire (7, 8) et
un boîtier (11a, 11b, 11c), destiné à loger à l'abri de la poussière et / ou de l'eau des composants électriques, qui forme un premier compartiment (15) de boîtier, le premier compartiment (15) de boîtier étant aménagé pour l'encapsulage résistant à la pression de composants électriques pour un environnement sous atmosphère explosive ou inflammable et réceptionnant le connecteur primaire (5) et
les au moins deux connecteurs secondaires (7, 8) étant placés à l'extérieur du premier compartiment (15) de boîtier,
au moins un pont protecteur (21) menant hors du premier compartiment (15) de boîtier, pour relier le connecteur primaire (5) avec les au moins deux connecteurs secondaires (7, 8),
le pont protecteur (21) comportant par connecteur secondaire (7, 8) chaque fois au moins un coupleur de données, pour la communication de données du connecteur primaire (5) vers le connecteur secondaire (7, 8) respectif et un coupleur de puissance sécure, pour la distribution de puissance du connecteur primaire (5) vers le connecteur secondaire (7, 8) respectif et étant aménagé pour qu'un niveau de puissance de pas plus de 10 W soit à la disposition de chaque connecteur électrique secondaire (7, 8), pour la communication de données et le transfert de puissance.

2. Équipement de terrain (1a, 1b, 1c) selon la revendication 1, **caractérisé en ce que** le boîtier (11a, 11b, 11c) forme au moins un compartiment de boîtier (17) supplémentaire, dans lequel est placé au moins un connecteur secondaire (7, 8), l'au moins un compartiment de boîtier (17) supplémentaire n'étant pas aménagé pour l'encapsulage résistant à la pression de composants électriques pour un environnement sous atmosphère explosive ou inflammable.

3. Équipement de terrain (1a, 1b, 1c) selon l'une quelconque des revendications précédentes, **caractérisé en ce que** le premier compartiment (15) de boîtier est délimité dans au moins un segment par une paroi extérieure (13) du boîtier (11a, 11b, 11c).

4. Équipement de terrain (1a, 1b, 1c) selon l'une quelconque des revendications précédentes, **caractérisé en ce que** le pont protecteur (21) traverse l'encapsulage que définit le premier compartiment (15) de boîtier et réalise une liaison électrique sans potentiel entre les au moins deux connecteurs électriques secondaires (7, 8) et le connecteur électrique primaire (5).

5. Équipement de terrain (1a, 1b, 1c) selon l'une quelconque des revendications précédentes, **caractérisé en ce que** le pont protecteur (21) comprend une isolation galvanique, comme un optocoupleur (41, 42) et / ou un coupleur inductif (43, 44), et / ou une barrière de puissance électrique.

6. Équipement de terrain (1a, 1b, 1c) selon l'une quelconque des revendications précédentes, **caractérisé en ce que** le système de diffusion de données (3) distributeur de puissance comprend un système de contrôle de charge (31) et un système de transmission de données (33) et le système de contrôle de charge (31) et / ou le système de transmission de données (33) étant réceptionnés dans le premier compartiment (15) de boîtier.

7. Équipement de terrain (1b, 1c) selon l'une quelconque des revendications précédentes, **caractérisé en ce que** dans le boîtier (11b, 11c), dans le premier compartiment (15) de boîtier est logé au moins un dispositif électronique ou mécatronique de circuit de régulation (51b, 51c), destiné à détecter et / ou à influencer une grandeur de processus de l'installation de procédés techniques, le dispositif de circuit de régulation (51b, 51c) étant alimenté par la puissance électrique amenée par l'intermédiaire du connecteur primaire (5).

8. Équipement de terrain (1b, 1c) selon la revendication 6 ou 7, **caractérisé en ce que** le dispositif de circuit de régulation (51b, 51c) est alimenté en puissance électrique au moyen du système de contrôle de charge (31) par l'intermédiaire d'un connecteur tertiaire (9), aménagé pour une communication de données et un transfert de puissance associés au deuxième niveau de puissance inférieur à 10W, qui est logé dans le premier compartiment (15) de boîtier.

9. Équipement de terrain (1b, 1c) selon la revendication 7 ou 8, **caractérisé en ce que** le dispositif de circuit de régulation (51b, 51c) est un régulateur, destiné à réguler un organe de réglage (100b, 100c), le régulateur comportant au moins une entrée de signaux (53b ; 53c) destinée à réceptionner un signal réel, tel qu'un signal de position réelle concernant l'organe de réglage (100b, 100c) et une sortie (53b, 53c, 110c), destinée à l'actionnement de l'organe de réglage (100b, 100c).

10. Équipement de terrain (1c) selon la revendication 9, **caractérisé en ce que** le dispositif de circuit de régulation (51c) comporte une sortie (110c) pneumatique, placée à l'intérieur du premier compartiment (15) de boîtier, pour la manœuvre d'un actionneur (101c) pneumatique d'un servomoteur pneumatique (100c).

11. Équipement de terrain (1b, 1c) selon l'une quelconque des revendications 7 à 10, **caractérisé en ce que** le dispositif de circuit de régulation (51b, 51c) comprend un capteur de position, placé à l'intérieur du premier compartiment (15) de boîtier, destiné à détecter la position d'une tringle de réglage (103b, 103c) ou d'un arbre de réglage de l'organe de réglage (100b, 100c), le capteur de position étant couplé sans contact et / ou mécaniquement avec l'organe de réglage (100b, 100c).

12. Équipement de terrain (1b, 1c) selon l'une quelconque des revendications précédentes, **caractérisé en ce que** sur les connecteurs secondaires (7, 8) sont connectées des conduites externes pour la transmission de données et / ou de puissance (117, 117b, 117c, 118, 118b), pour le raccordement d'un ou de plusieurs composants de l'installation de procédés techniques, qui à travers un passage (167, 168) respectif, sont tirées hors du boîtier (11a, 11b, 11b).

13. Équipement de terrain (1b, 1c) selon l'une quelconque des revendications précédentes, **caractérisé par** une conduite primaire (60) raccordée sur le connecteur primaire (5), pour la transmission de données et de puissance à partir d'un dispositif de commande, tel qu'une salle de contrôle centralisée de l'installation de procédés techniques.

14. Système, comprenant un équipement de terrain (1a, 1b, 1c) selon l'une quelconque des revendications précédentes et un organe de réglage (100b, 100c) pourvu d'au moins un convertisseur (110b) électropneumatique placé à l'extérieur du boîtier (11a, 11b, 11c) et / ou d'un générateur de signaux réels, tel qu'un capteur de position (120b), qui comporte une entrée et / ou une sortie (111, 121), de signaux électriques, laquelle est reliée avec un connecteur secondaire (7, 8) de l'équipement de terrain (1a, 1b, 1c).
